# EUROPEAN PATENT APPLICATION

(11) **EP 4 693 877 A1**
(43) Date of publication of application: **11.02.2026**
(21) Application number: 24779677.4
(22) Date of filing: 18.03.2024
(51) Int. Cl.: H02M 7/48

(54) **INVERTER DEVICE, MOTOR DRIVE DEVICE INCLUDING SAME, AND REFRIGERATION DEVICE**

(30) Priority: 31.03.2023 JP 2023058647
(71) Applicant: Daikin Industries, Ltd., Osaka-shi, Osaka 530-0001 (JP)
(72) Inventor: MIZOTA, Kazutaka, Osaka-shi, Osaka 530-0001 (JP)
(74) Representative: Hoffmann Eitle
(86) International application number: PCT/JP2024/010592
(87) International publication number: WO 2024/203552

(57) **Abstract**

An issue to be solved in the present disclosure is to improve efficiency of an inverter including a resonance circuit and an inverter circuit under a light load. Although a switching loss in an inverter circuit (26) decreases as a resonance circuit (25) operates, efficiency decreases conversely since, when a load applied to the inverter circuit (26) becomes equal to or lower than a predetermined value, consumption energy in the resonance circuit exceeds consumption energy in the inverter circuit (26). Therefore, in this inverter device (100), operation of the resonance circuit (25) is stopped when a load is equal to or lower than the predetermined value to improve the efficiency of the inverter device (100) as a whole.

## Description

### TECHNICAL FIELD

The present disclosure relates to an inverter device.

### BACKGROUND ART

As means for decreasing a switching loss in a switching element in an inverter circuit, for example, PTL 1 (Japanese Unexamined Patent Application Publication No. H8-149854) teaches zero current switching or zero voltage switching using partial resonance.

### SUMMARY OF INVENTION

### <Technical Problem>

Although the switching loss in the inverter circuit decreases due to partial resonance, efficiency decreases conversely since, when a load applied to the inverter circuit reaches a light load equal to or lower than a predetermined value, consumption energy in a resonance circuit exceeds consumption energy in the inverter circuit. Therefore, it has been demanded to decrease overall efficiency including the resonance circuit and the inverter circuit under a light load.

### <Solution to Problem>

An inverter device according to a first aspect includes an inverter circuit, a detection unit, and a control unit. A resonance circuit is coupled to the inverter circuit. The detection unit directly or indirectly detects a load applied to the inverter circuit. The control unit stops operation of the resonance circuit when a detection value of the detection unit is equal to or lower than a predetermined value.

Although a switching loss in an inverter circuit decreases as a resonance circuit operates, efficiency decreases conversely since, when a load applied to the inverter circuit becomes equal to or lower than a predetermined value, consumption energy in the resonance circuit exceeds consumption energy in the inverter circuit.

Therefore, in this inverter device, operation of the resonance circuit is stopped when a load is equal to or lower than the predetermined value to improve efficiency of the inverter device as a whole.

An inverter device according to a second aspect corresponds to the inverter device according to the first aspect, in which the detection unit detects an output current of the inverter circuit. The control unit stops operation of the resonance circuit when a detection value of the output current is equal to or lower than a first predetermined value.

Since, in this inverter device, an increase or a decrease in load applied to the inverter circuit appears as an increase or a decrease in output current of the inverter circuit, it is possible to determine whether or not to stop operation of the resonance circuit depending on whether or not a detection value of the output current is equal to or lower than the first predetermined value.

An inverter device according to a third aspect corresponds to the inverter device according to the first aspect, in which the detection unit detects output power of the inverter circuit. The control unit stops operation of the resonance circuit when a detection value of the output power is equal to or lower than a second predetermined value.

Since, in this inverter device, an increase or a decrease in load applied to the inverter circuit appears as an increase or a decrease in output power of the inverter circuit, it is possible to determine whether or not to stop operation of the resonance circuit depending on whether or not a detection value of the output power is equal to or lower than the second predetermined value.

An inverter device according to a fourth aspect corresponds to the inverter device according to the first aspect, in which the detection unit detects a temperature of a switching element in the inverter circuit. The control unit stops operation of the resonance circuit when a detection value of the temperature is equal to or lower than a third predetermined value.

Since, in this inverter device, an increase or a decrease in load applied to the inverter circuit appears as an increase or a decrease in temperature of the switching element in the inverter circuit, it is possible to determine whether or not to stop operation of the resonance circuit depending on whether or not a detection value of the temperature of the switching element is equal to or lower than the third predetermined value.

An inverter device according to a fifth aspect corresponds to the inverter device according to the second aspect, in which, when a rated output current of the inverter circuit is 100%, the first predetermined value is set between 25% and 80% inclusive.

An inverter device according to a sixth aspect corresponds to the inverter device according to the third aspect, in which, when rated output power of the inverter circuit is 100%, the second predetermined value is set between 25% and 80% inclusive.

An inverter device according to a seventh aspect corresponds to the inverter device according to any one of the first aspect to the sixth aspect, in which the control unit determines a carrier frequency of the inverter circuit. The control unit further sets the carrier frequency after operation of the resonance circuit is stopped to be higher than the carrier frequency when the resonance circuit is operated.

In this inverter device, as an inverter operates when a load applied to the inverter circuit is equal to or lower than a predetermined value and within a frequency driving range that is impossible to achieve even when the resonance circuit operates, efficiency of the inverter device and a motor improves as a whole, when the load applied to the inverter device is the motor, for example.

An inverter device according to an eighth aspect corresponds to the inverter device according to any one of the first aspect to the sixth aspect, in which the switching element in the inverter circuit is a wide band gap device including a wide band gap semiconductor of silicon carbide (SiC) or gallium nitride (GaN).

In this inverter device, applying the wide band gap device to the switching element enhances an effect of decreasing a loss in the switching element.

An inverter device according to a ninth aspect corresponds to the inverter device according to any one of the first aspect to the sixth aspect, in which the inverter circuit includes a switching leg to which a first switching element forming an upper arm and a second switching element forming a lower arm are coupled to each other in series. In addition, the resonance circuit includes a first auxiliary circuit and a second auxiliary circuit. The first auxiliary circuit is a circuit in which a first auxiliary switching element is combined with one or more first reactors, one or more first diodes, and one or more first capacitors, respectively, the first auxiliary circuit being coupled in parallel to the first switching element in the inverter circuit. The second auxiliary circuit is a circuit in which a second auxiliary switching element is combined with one or more second reactors, one or more second diodes, and one or more second capacitors, respectively, the second auxiliary circuit being coupled in parallel to the second switching element in the inverter circuit.

An inverter device according to a tenth aspect corresponds to the inverter device according to the ninth aspect, in which the inverter circuit further includes a first freewheeling diode and a second freewheeling diode. The first freewheeling diode is coupled in parallel to the first switching element. The second freewheeling diode is coupled in parallel to the second switching element.

An inverter device according to an eleventh aspect corresponds to the inverter device according to the ninth aspect, in which the first switching element and the second switching element are metal-oxide-semiconductor field-effect transistors (MOSFETs). A parasitic diode for the first switching element is used as a freewheeling diode. In addition, a parasitic diode for the second switching element is used as a freewheeling diode.

An inverter device according to a twelfth aspect corresponds to the inverter device according to the tenth aspect, in which, in the first auxiliary circuit, the first auxiliary switching element and the first reactor are coupled to each other in series and a circuit in which one end of the first capacitor is coupled to an anode of the first diode is coupled in parallel to the first reactor. In the second auxiliary circuit, the second auxiliary switching element and the second reactor are coupled to each other in series and a circuit in which one end of the second capacitor is coupled to a cathode of the second diode is coupled in parallel to the second reactor. The control unit turns on the second auxiliary switching element when the first switching element is turned off to allow the first capacitor to discharge electricity, and then turns on the second switching element.

A motor drive device according to a thirteenth aspect includes: the inverter device according to any one of the first aspect to the sixth aspect; and a motor that the inverter device drives.

A refrigeration apparatus according to a fourteenth aspect includes the inverter device according to any one of the first aspect to the sixth aspect.

### BRIEF DESCRIPTION OF DRAWINGS

[Fig. 1] Fig. 1 is a configuration diagram of a refrigeration apparatus including an inverter device according to an embodiment of the present disclosure.
[Fig. 2] Fig. 2 is a circuit block diagram of the inverter device.
[Fig. 3] Fig. 3 is a circuit diagram of a resonance circuit coupled to an inverter circuit.
[Fig. 4] Fig. 4 is a timing chart of turning on and turning off of a first switching element and a second switching element.
[Fig. 5A] Fig. 5A is a circuit diagram illustrating a flow of a current in the resonance circuit and the inverter circuit within a section up to t0 (t0 is not included) illustrated in Fig. 4.
[Fig. 5B] Fig. 5B is a circuit diagram illustrating the flow of the current in the resonance circuit and the inverter circuit within a section from t0 to t1 (t1 is not included) illustrated in Fig. 4.
[Fig. 5C] Fig. 5C is a circuit diagram illustrating the flow of the current in the resonance circuit and the inverter circuit within a section from t1 to t2 (t2 is not included) illustrated in Fig. 4.
[Fig. 5D] Fig. 5D is a circuit diagram illustrating the flow of the current in the resonance circuit and the inverter circuit within a section from t2 to t3 (t3 is not included) illustrated in Fig. 4.
[Fig. 5E] Fig. 5E is a circuit diagram illustrating the flow of the current in the resonance circuit and the inverter circuit within a section from t3 to t4 (t4 is not included) illustrated in Fig. 4.
[Fig. 5F] Fig. 5F is a circuit diagram illustrating the flow of the current in the resonance circuit and the inverter circuit within a section from t4 to t5 illustrated in Fig. 4.
[Fig. 6A] Fig. 6A is a graph illustrating a relationship between an output current of the inverter circuit and overall efficiency of inverter × motor.
[Fig. 6B] Fig. 6B is a graph illustrating a relationship between a temperature increase value of each of the switching elements and overall efficiency of inverter × motor.
[Fig. 7] Fig. 7 is a graph illustrating transition of efficiency due to a change in carrier frequency under a load of approximately 25%.
[Fig. 8A] Fig. 8A is a graph illustrating a change in overall efficiency when the carrier frequency is increased from a present value, that is, 25 kHz to 38 kHz within a range of a load equal to or lower than 42% illustrated in Fig. 6A.
[Fig. 8B] Fig. 8B is a graph illustrating a change in overall efficiency when the carrier frequency is increased from the present value, that is, 25 kHz to 38 kHz within a range where a temperature increase value of each of the switching elements illustrated in Fig. 6B is equal to or lower than 17 deg (equal to or lower than 42% in load conversion).-
[Fig. 8C] Fig. 8C is a graph illustrating a relationship between an output of an inverter circuit and overall efficiency of inverter × motor due to a loss difference in a resonance circuit in an inverter having an identical output capacity.
[Fig. 9A] Fig. 9A is a control flowchart of a microcomputer for the resonance circuit according to the present embodiment.
[Fig. 9B] Fig. 9B is a control flowchart of the microcomputer for the resonance circuit according to a first modification example.
[Fig. 9C] Fig. 9C is a control flowchart of the microcomputer for the resonance circuit according to a second modification example.
[Fig. 10] Fig. 10 is a configuration diagram of an inverter circuit using an insulated gate bipolar transistor (IGBT) as a switching element.

### DESCRIPTION OF EMBODIMENTS

### (1) Configuration of Refrigeration Apparatus 1

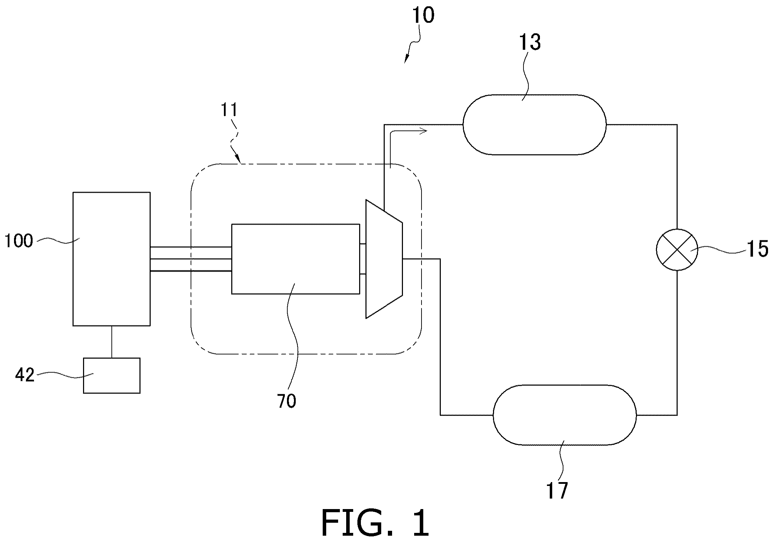

Fig. 1 is a configuration diagram of a refrigeration apparatus 1 including an inverter device 100 according to an embodiment of the present disclosure. In Fig. 1, the refrigeration apparatus 1 includes a refrigerant circuit 10 filled with a refrigerant. In the refrigerant circuit 10, a compressor 11, a radiator 13, a pressure decreasing mechanism 15, and an evaporator 17 are coupled to each other in an annular shape. In the present embodiment, the pressure decreasing mechanism 15 is an expansion valve. The refrigeration apparatus 1 performs a vapor compression refrigeration cycle.

The refrigerant discharged from the compressor 11 dissipates heat in the radiator 13. The refrigerant flowing out of the radiator 13 is decompressed in the pressure decreasing mechanism 15 and evaporated in the evaporator 17. The refrigerant flowing out of the evaporator 17 is sucked into the compressor 11.

The inverter device 100 is a device for driving a motor 70 of the compressor 11. A microcomputer 42 controls the motor 70 of the compressor 11 via the inverter device 100.

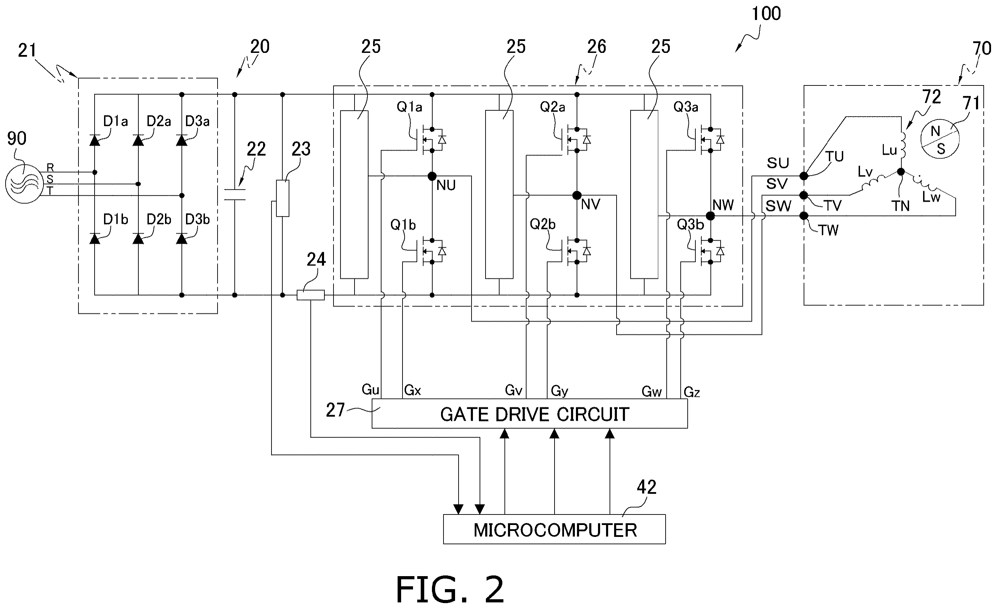

Fig. 2 is a circuit block diagram of the inverter device 100. In Fig. 2, the motor 70 of the compressor 11 is a three-phase brush-less direct-current (DC) motor, and includes a stator 72 and a rotor 71. The stator 72 includes respective phase winding wires Lu, Lv, and Lw for a U phase, a V phase, and a W phase, which are coupled to each other in a star-coupling manner. Respective ends of the respective phase winding wires Lu, Lv, and Lw are coupled to respective phase winding wire terminals TU, TV, and TW for respective winding wires for the U phase, the V phase and the W phase, which respectively extend from the inverter circuit 26. Other respective ends of the respective phase winding wires Lu, Lv, and Lw respectively serve as terminals TN and are coupled to each other. As the rotor 71 rotates, the respective phase winding wires Lu, Lv, and Lw generate an induced voltage corresponding to a rotational speed and a position of the rotor 71.

The rotor 71 includes a permanent magnet having a plurality of poles including an N pole and an S pole, and rotates around an axis with respect to the stator 72.

### (2) Configuration of Inverter Device 100

As illustrated in Fig. 1, the inverter device 100 is mounted on the refrigeration apparatus 1. As illustrated in Fig. 2, the inverter device 100 includes a power source circuit 20, resonance circuits 25, an inverter circuit 26, a gate drive circuit 27, and the microcomputer 42. The power source circuit 20 includes a rectifier circuit 21 and a capacitor 22.

### (2-1) Rectifier Circuit 21

Six diodes D1a, D1b, D2a, D2b, D3a, and D3b are arranged in a bridge manner to form the rectifier circuit 21. Specifically, the diodes D1a and D1b, the diodes D2a and D2b, and the diodes D3a and D3b are respectively coupled to each other in series.

Cathode terminals of the diodes D1a, D2a, and D3a are all coupled to a positive-electrode-side terminal of the capacitor 22 and each function as a positive-electrode-side output terminal of the rectifier circuit 21. Anode terminals of the diodes D1b, D2b, and D3b are all coupled to a negative-electrode-side terminal of the capacitor 22 and each function as a negative-electrode-side output terminal of the rectifier circuit 21.

A coupling point between the diode D1a and the diode D1b is coupled, on an output side, to an R phase of an alternating current (AC) power source 90. A coupling point between the diode D2a and the diode D2b is coupled, on an output side, to an S phase of the AC power source 90. A coupling point between the diode D3a and the diode D3b is coupled, on an output side, to an T phase of the AC power source 90. The rectifier circuit 21 rectifies an alternating-current voltage outputted from the AC power source 90 to generate and supply a direct-current voltage to the capacitor 22.

### (2-2) Capacitor 22

One end of the capacitor 22 is coupled to the positive-electrode-side output terminal of the rectifier circuit 21, and another end is coupled to the negative-electrode-side output terminal of the rectifier circuit 21. The capacitor 22 is a capacitor that smoothes a voltage that the rectifier circuit 21 rectifies and fluctuation in voltage, which occurs due to switching in the inverter circuit 26. For convenience of description, an inter-terminal voltage of the capacitor 22 will be hereinafter referred to as a DC bus voltage.

The DC bus voltage is applied to the inverter circuit 26 coupled, on an output side, to the capacitor 22. In other words, the rectifier circuit 21 and the capacitor 22 form the power source circuit 20 for the inverter circuit 26. As the capacitor 22, a capacitor such as an electrolytic capacitor suitable for specifications of the inverter is appropriately adopted.

### (2-3) Voltage Detector 23

The voltage detector 23 is coupled, on the output side, to the capacitor 22 and detects a value of the inter-terminal voltage of the capacitor 22, that is, the DC bus voltage. In the voltage detector 23, for example, two resistors coupled to each other in series are coupled in parallel to the capacitor 22 and are configured to divide the DC bus voltage. A value of a voltage at a coupling point between the two resistors is inputted to the microcomputer 42.

### (2-4) Current Detector 24

The current detector 24 is provided between the capacitor 22 and the inverter circuit 26 and is coupled to the negative-electrode-side output terminal of the capacitor 22. The current detector 24 detects an output current of the inverter circuit 26.

The current detector 24 may be configured to include, for example, an amplifier circuit using a shunt resistance and an operational amplifier that amplifies an inter-terminal voltage of the resistor. A value of a current that the current detector 24 detects is inputted to the microcomputer 42.

### (2-5) Inverter Circuit 26

In the inverter circuit 26, three pairs of upper and lower arms respectively corresponding to the respective phase winding wires Lu, Lv, and Lw for the U phase, the V phase, and the W phase of the motor 70 are coupled to each other in parallel and are coupled, on the output side, to the capacitor 22.

In Fig. 2, the inverter circuit 26 includes a plurality of MOSFETs (metal-oxide-semiconductor field-effect switching elements or hereinafter simply referred to as switching elements) Q1a, Q1b, Q2a, Q2b, Q3a, and Q3b.

In the present embodiment, the switching elements Q1a to Q3b are wide band gap devices each including a wide band gap semiconductor of silicon carbide (SiC) or gallium nitride (GaN).

As illustrated in Fig. 2, the switching elements Q1a to Q3b each include a diode coupled in an anti-parallel manner. These are parasitic diodes (body diodes) for the respective switching elements Q1a to Q3b, and are used as freewheeling diodes in the present embodiment.

The switching elements Q1a and Q1b, Q2a and Q2b, and Q3a and Q3b are respectively coupled to each other in series to form the pairs of upper and lower arms, forming coupling points NU, NV, and NW as a result, from which output lines respectively extend to the respective phase winding wires Lu, Lv, and Lw for the corresponding phases.

When the DC bus voltage is applied from the capacitor 22, the inverter circuit 26 turns on and off the switching elements Q1a to Q3b at timings that the gate drive circuit 27 instructs, generating drive voltages SU, SV, and SW for driving the motor 70. These drive voltages SU, SV, and SW are respectively outputted from the coupling points NU, NV, and NW of the switching elements Q1a and Q1b, Q2a and Q2b, and Q3a and Q3b to the respective phase winding wires Lu, Lv, and Lw of the motor 70.

The resonance circuits 25 are coupled to the inverter circuit 26. A detailed configuration of each of the resonance circuits 25 will be described in the next section (3).

### (2-6) Gate Drive Circuit 27

Based on an instruction voltage from the microcomputer 42, the gate drive circuit 27 changes an on state and an off state of each of the switching elements Q1a to Q3b in the inverter circuit 26. Specifically, the gate drive circuit 27 generates gate control voltages Gu, Gx, Gv, Gy, Gw, and Gz to be applied respectively to gates of the switching elements Q1a to Q3b to allow the pulse-shaped drive voltages SU, SV, and SW each having a duty that the microcomputer 42 has determined to be outputted from the inverter circuit 26 to the motor 70. The generated gate control voltages Gu, Gx, Gv, Gy, Gw, and Gz are respectively applied to gate terminals of the switching elements Q1a to Q3b.

### (2-7) Microcomputer 42

The microcomputer 42 is coupled to the voltage detector 23, the current detector 24, and the gate drive circuit 27. In the present embodiment, the microcomputer 42 uses a rotor position sensor-less style to drive the motor 70. Note that the present disclosure is not limited to use the rotor position sensor-less style, and a sensor style may be used.

The rotor position sensor-less style is a driving style in which, for example, various types of parameters indicating characteristics of the motor 70, a result of detection of the voltage detector 23 and a result of detection of the current detector 24 after the motor 70 is activated, and a predetermined mathematical model related to control of the motor 70 or the like are used to perform estimation of a position and a number of rotations of the rotor, proportional integral (PI) control for the number of rotations, and PI control for a motor current or the like. Examples of the various types of parameters indicating the characteristics of the motor 70 include resistance in the winding wires, an inductance component, an induced voltage, and the number of poles of the motor 70 to be used. Note that reference should be made to many patent literatures describing and disclosing details of control in a rotor position sensor-less manner (for example, Japanese Unexamined Patent Application Publication No. 2013-17289).

### (3) Configuration of Resonance Circuit 25

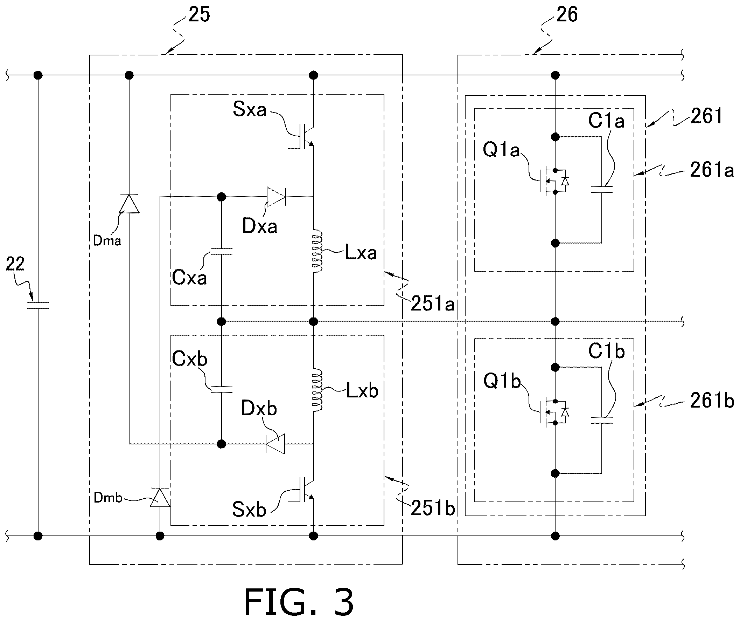

Fig. 3 is a circuit diagram of the resonance circuit 25 coupled to the inverter circuit 26. In Fig. 3, a circuit in which the switching element Q1a on the upper arm and the switching element Q1b on the lower arm are coupled to each other in series is referred to as a switching leg 261.

The inverter circuit 26 has three switching legs, and the resonance circuits 25 are respectively provided in the switching legs. A main capacitor C1a is coupled in parallel to the switching element Q1a, and a main capacitor C1b is coupled in parallel to the switching element Q1b.

For convenience of description, Q1a is referred to as a first switching element, Q1b is referred to as a second switching element, C1a is referred to as a first main capacitor, and C1b is referred to as a second main capacitor.

The first main capacitor C1a and the second main capacitor C1b respectively form main resonance circuits for the resonance circuit 25. In addition, the resonance circuit 25 includes a first auxiliary circuit 251a and a second auxiliary circuit 251b.

### (3-1) First Auxiliary Circuit 251a

A series circuit of a switching element Sxa and a reactor Lxa is coupled in parallel to the first switching element Q1a. For convenience of description, Sxa is referred to as a first auxiliary switching element, and Lxa is referred to as a first reactor.

In addition, a series circuit of a diode Dxa and a capacitor Cxa is coupled in parallel to the first reactor Lxa. For convenience of description, Dxa is referred to as a first diode, and Cxa is referred to as a first auxiliary capacitor.

Furthermore, a diode Dmb is coupled between a coupling point of the first diode Dxa and the first auxiliary capacitor Cxa and a negative electrode terminal of the capacitor 22.

### (3-2) Second Auxiliary Circuit 251b

A series circuit of a switching element Sxb and a reactor Lxb is coupled in parallel to the second switching element Q1b. For convenience of description, Sxb is referred to as a second auxiliary switching element, and Lxb is referred to as a second reactor.

In addition, a series circuit of a diode Dxb and a capacitor Cxb is coupled in parallel to the second reactor Lxb. For convenience of description, Dxb is referred to as a second diode, and Cxb is referred to as a second auxiliary capacitor.

Furthermore, a diode Dma is coupled between a coupling point of the second diode Dxb and the second auxiliary capacitor Cxb and a positive electrode terminal of the capacitor 22.

### (4) Operation of Resonance Circuit 25

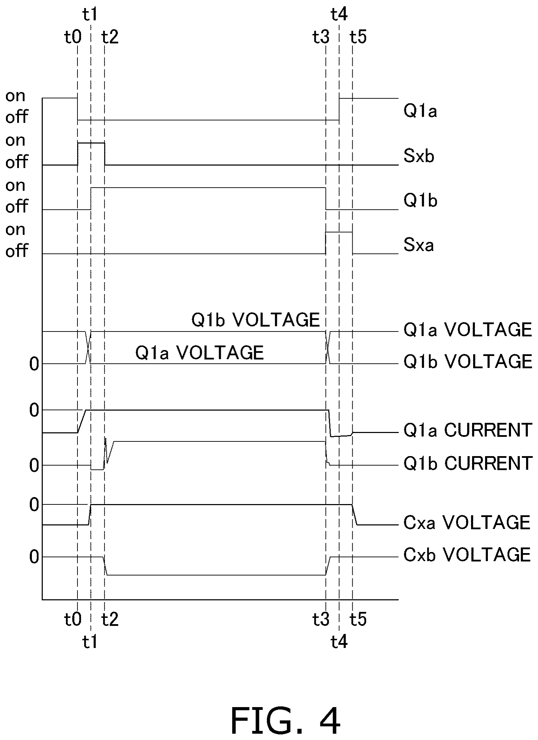

Fig. 4 is a timing chart of turning on and turning off of the first switching element Q1a and the second switching element Q1b. In Fig. 4, in a timing chart from t0 to t2, the first switching element Q1a is turned off, the second switching element Q1b is turned on, and a load current I flows through the second switching element Q1b.

In addition, in a timing chart from t3 to t5, the second switching element Q1b is turned off, the first switching element Q1a is turned on, and the load current I flows through the first switching element Q1a.

### (4-1) Section up to t0 (t0 is not included)

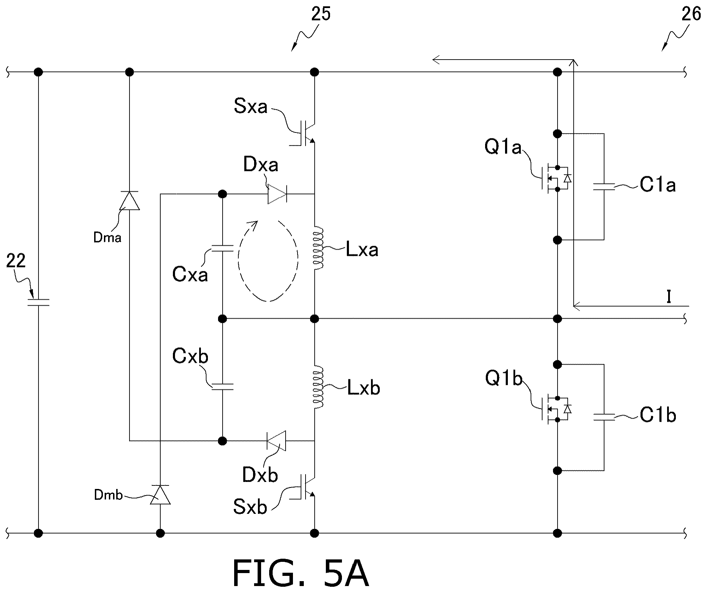

Fig. 5A is a circuit diagram illustrating a flow of a current in the resonance circuit 25 and the inverter circuit 26 within a section up to t0 (t0 is not included) illustrated in Fig. 4. In Fig. 5A, up to t0, the load current I flows through the first switching element Q1a.

### (4-2) Section from t0 to t1 (t1 is not included)

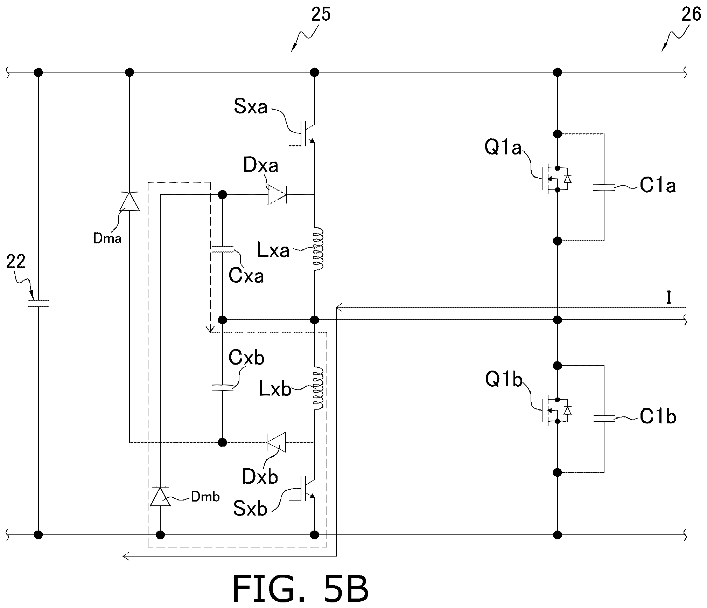

Fig. 5B is a circuit diagram illustrating the flow of the current in the resonance circuit 25 and the inverter circuit 26 within a section from t0 to t1 (t1 is not included) illustrated in Fig. 4. In Fig. 5B, at t0, the first switching element Q1a is turned off, and, simultaneously, the second auxiliary switching element Sxb is turned on.

When the first switching element Q1a is turned off, a voltage of the first main capacitor C1a is zero, achieving zero voltage switching (hereinafter referred to as ZVS).

At this time, a current of the second reactor Lxb increases from 0. When the second auxiliary switching element Sxb is turned on, the current of the second reactor Lxb is zero, achieving zero current switching (hereinafter, referred to as ZCS).

When the current of the second reactor Lxb reaches the load current I and the parasitic diode for the first switching element Q1a is cut off, electrical energy of the first auxiliary capacitor Cxa is discharged to a circuit including the first auxiliary capacitor Cxa, the second reactor Lxb, the second auxiliary switching element Sxb, and the diode Dmb, allowing a partial resonance current to flow.

### (4-3) Section from t1 to t2 (t2 is not included)

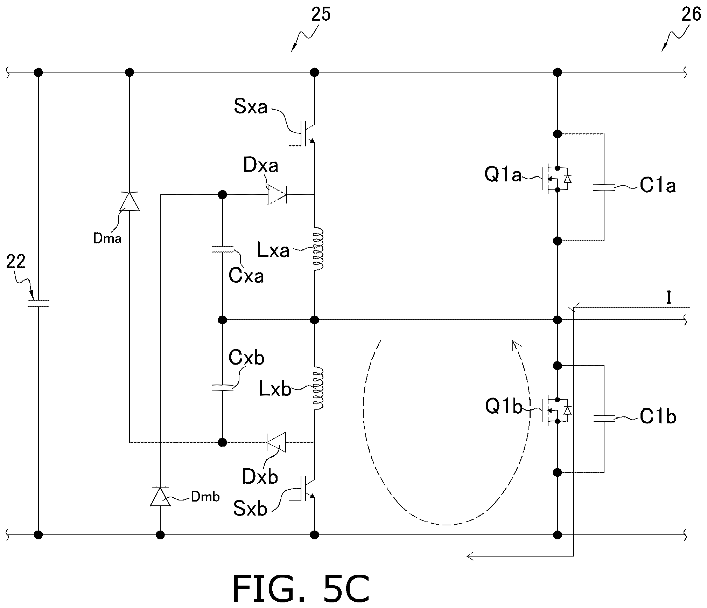

Fig. 5C is a circuit diagram illustrating the flow of the current in the resonance circuit 25 and the inverter circuit 26 within a section from t1 to t2 (t2 is not included) illustrated in Fig. 4. In Fig. 5C, when the current of the second reactor Lxb reaches a peak value, a voltage of the second reactor Lxb becomes zero, the parasitic diode for the second switching element Q1b becomes conductive, a reflux is achieved in a loop of the parasitic diode for the second switching element Q1b, the second reactor Lxb, and the second auxiliary switching element Sxb, and a partial resonance current flows through the second reactor Lxb in a superimposed manner on the load current I. This state continues until the second auxiliary switching element Sxb is turned off. Within this period, the second switching element Q1b is turned on. This point in time is referred to as t1.

The second switching element Q1b is turned on while the partial resonance current flows in a superimposed manner on the load current I, achieving turning on due to ZVS. In addition, since the parasitic diode for the second switching element Q1b is cut off and a current of the second switching element Q1b increases, turning on of the second switching element Q1b is also ZCS. Thereafter, the second auxiliary switching element Sxb is turned off. This point in time is referred to as t2.

### (4-4) Section from t2 to t3 (t3 is not included)

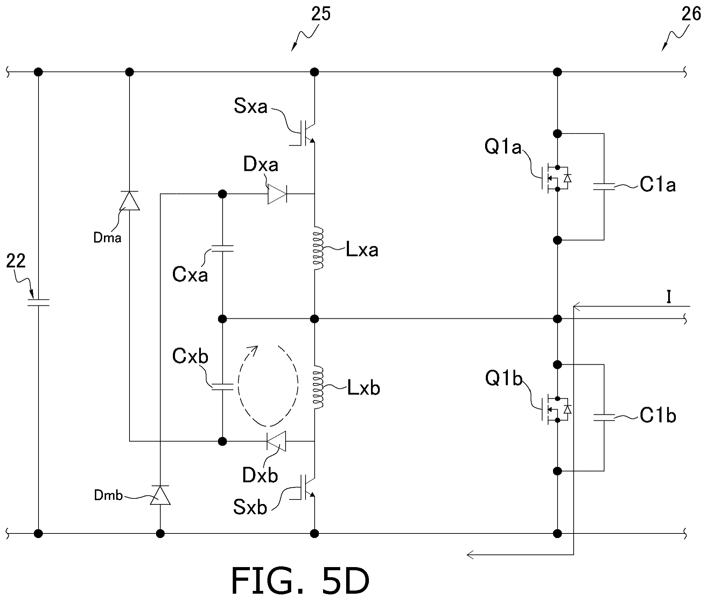

Fig. 5D is a circuit diagram illustrating the flow of the current in the resonance circuit 25 and the inverter circuit 26 within a section from t2 to t3 (t3 is not included) illustrated in Fig. 4. In Fig. 5D, when the second auxiliary switching element Sxb is turned off, the current of the second reactor Lxb becomes a partial resonance current of the second reactor Lxb and the second auxiliary capacitor Cxb, charging the second auxiliary capacitor Cxb.

Since a voltage of the second auxiliary capacitor Cxb is zero, turning off of the second auxiliary switching element Sxb is ZVS.

Since the parasitic diode for the second switching element Q1b has become conductive, the current of the second reactor Lxb decreases. The load current I flows through the second switching element Q1b, allowing the second switching element Q1b to enter an operating state.

### (4-5) Section from t3 to t4 (t4 is not included)

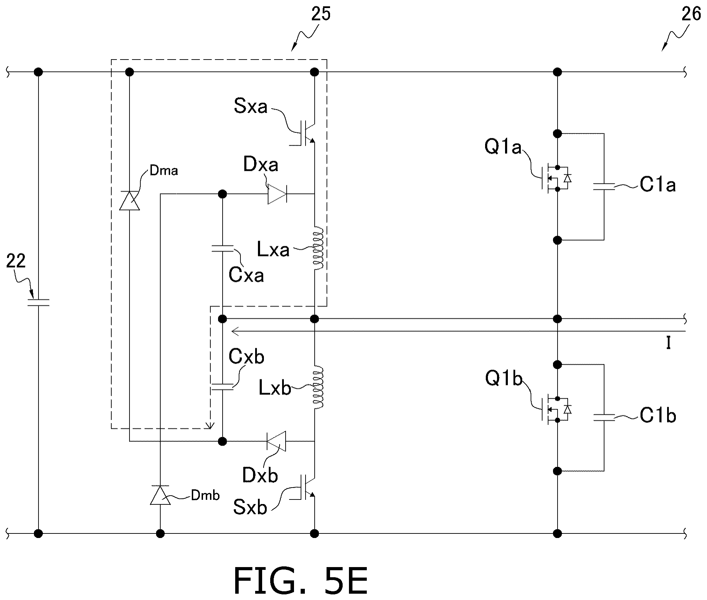

Fig. 5E is a circuit diagram illustrating the flow of the current in the resonance circuit 25 and the inverter circuit 26 within a section from t3 to t4 (t4 is not included) illustrated in Fig. 4. In Fig. 5E, at t3, the second switching element Q1b is turned off, and, simultaneously, the first auxiliary switching element Sxa is turned on.

When the second switching element Q1b is turned off, a voltage of the second main capacitor C1b is zero, achieving ZVS.

At this time, a current of the first reactor Lxa increases from 0. When the first auxiliary switching element Sxa is turned on, the current of the first reactor Lxa is zero, achieving ZCS.

When the current of the first reactor Lxa reaches I and the parasitic diode for the second switching element Q1b is cut off, electrical energy of the second auxiliary capacitor Cxb is discharged to a circuit including the second auxiliary capacitor Cxb, the first reactor Lxa, the first auxiliary switching element Sxa, and the diode Dma, allowing a partial resonance current to flow.

### (4-6) Section from t4 to t5

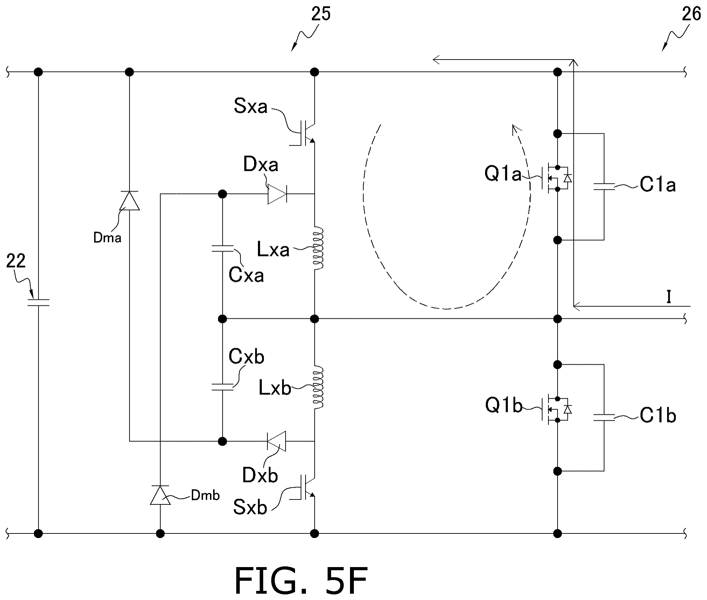

Fig. 5F is a circuit diagram illustrating the flow of the current in the resonance circuit 25 and the inverter circuit 26 within a section from t4 to t5 illustrated in Fig. 4. In Fig. 5F, when the current of the first reactor Lxa reaches a peak value, a voltage of the first reactor Lxa becomes zero, the parasitic diode for the first switching element Q1a becomes conductive, a reflux is achieved in a loop of the parasitic diode for the first switching element Q1a, the first reactor Lxa, and the first auxiliary switching element Sxa, and a partial resonance current flows through the first reactor Lxa in a superimposed manner on the load current I. This state continues until the first auxiliary switching element Sxa is turned off. Within this period, the first switching element Q1a is turned on. This point in time is referred to as t4.

The first switching element Q1a is turned on while the partial resonance current flows in a superimposed manner on the load current I, achieving turning on due to ZVS. In addition, since the parasitic diode for the first switching element Q1a is cut off and a current of the first switching element Q1a increases, turning on of the second switching element Q1b is also ZCS. Thereafter, the first auxiliary switching element Sxa is turned off. This point in time is referred to as t5.

As described above, when the first switching element Q1a and the second switching element Q1b are turned on and/or turned off, the resonance circuit 25 causes a resonance phenomenon to be generated, achieving ZCS or ZVS (hereinafter referred to as "soft switching"). As a result, a switching loss is decreased.

### (5) Disadvantages of Soft Switching and its Countermeasures

In the refrigeration apparatus 1 illustrated in Fig. 1, to which soft switching is applied when the switching elements Q1a to Q3b in the inverter device 100 perform switching operation, peak efficiency of the motor 70 that the inverter device 100 drives is improved.

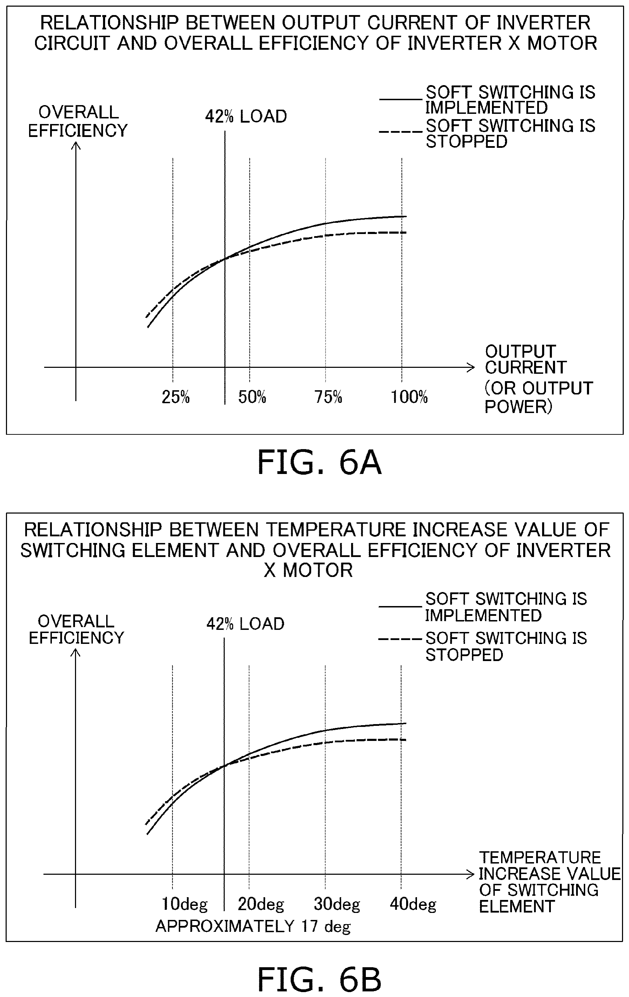

Fig. 6A is a graph illustrating a relationship between an output current of the inverter circuit 26 and overall efficiency of inverter × motor. In Fig. 6A, a load applied to the inverter circuit 26 is substituted by an output current of the inverter circuit 26. The output current of the inverter circuit 26 may be substituted by output power of the inverter circuit 26.

Fig. 6B is a graph illustrating a relationship between a temperature increase value of each of the switching elements Q1a to Q3b and overall efficiency of inverter × motor. In Fig. 6B, a load applied to the inverter circuit 26 is substituted by the temperature increase value of each of the switching elements Q1a to Q3b.

### (5-1) Disadvantages of Soft Switching

In Fig. 6A, when the output current (or output power) of the inverter circuit 26 is equal to or lower than 42% of a rated output current (or rated output power) of the inverter circuit 26, overall efficiency when soft switching is implemented is lower than overall efficiency when soft switching is stopped.

Similarly, in Fig. 6B, when the temperature increase value of each of the switching elements is equal to or lower than 17 deg (equal to or lower than 42% in load conversion), overall efficiency when soft switching is implemented is lower than overall efficiency when soft switching is stopped.

One reason of this phenomenon is that soft switching is regarded as a base load, and, when a load applied to the inverter circuit 26 is equal to or lower than 42%, consumption energy in the resonance circuit 25 exceeds consumption energy in the inverter circuit 26, conversely resulting in deterioration in efficiency.

### (5-2) Countermeasure 1

By taking into consideration those illustrated in Fig. 6A and Fig. 6B, stopping soft switching when the output current or the output power of the inverter circuit 26 is equal to or lower than 42% or when the temperature increase value of each of the switching elements is equal to or lower than 17 deg (equal to or lower than 42% in load conversion) makes it possible to improve overall efficiency.

In the present embodiment, as illustrated in Fig. 2, the current detector 24 detects a current of the inverter circuit 26, and its detection value is inputted into the microcomputer 42. When it is determined that the output current of the inverter circuit 26 is equal to or lower than 42%, the microcomputer 42 causes the first auxiliary switching element Sxa and the second auxiliary switching element Sxb to be each in the off state to stop operation of the resonance circuit 25. Thereby, overall efficiency is improved.

### (5-3) Countermeasure 2

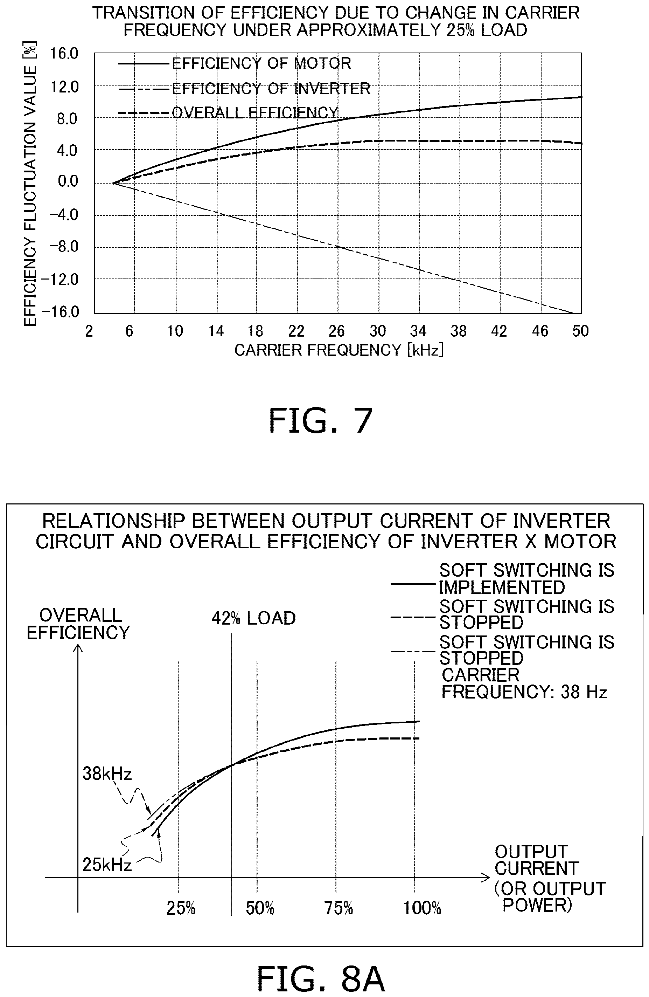

Fig. 7 is a graph illustrating transition of efficiency due to a change in carrier frequency under a load of approximately 25%. In Fig. 7, as the carrier frequency is increased, efficiency of the motor gradually increases, while efficiency of the inverter linearly decreases. Overall efficiency that is a sum of the efficiency of the motor and the efficiency of the inverter presents a peak within a range from 30 kHz to 46 kHz inclusive.

Therefore, in the present embodiment, when it is determined that an output current of the inverter circuit 26 is equal to or lower than 42%, the microcomputer 42 not only takes Countermeasure 1 (stopping of operation of the resonance circuit 25), but also increases the carrier frequency from the present value, that is, 25 Hz to 38 Hz to improve overall efficiency.

In addition, in the present embodiment, the switching elements Q1a to Q3b are wide band gap devices each including a wide band gap semiconductor of silicon carbide (SiC) or gallium nitride (GaN). For example, although, when insulated gate bipolar transistors (IGBTs) are used as the switching elements Q1a to Q3b, it is not preferable to increase the carrier frequency due to an influence of a tail current, the MOSFETs and the wide band gap devices allow the carrier frequency to increase, leading to a high decreasing effect of a switching loss when soft switching is implemented.

### (5-4) Confirmation of Effects

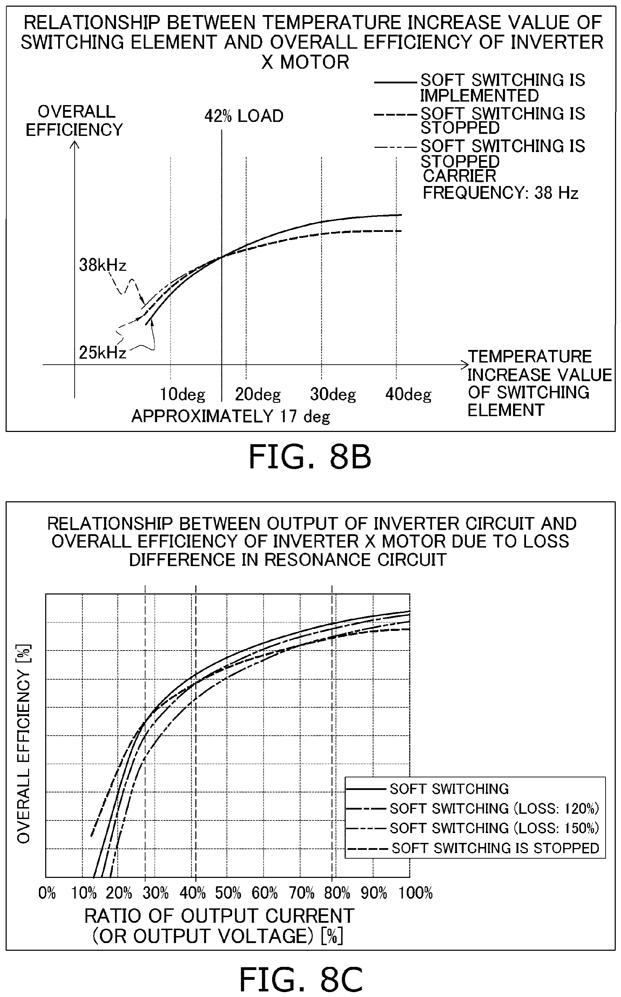

Fig. 8A is a graph illustrating a change in overall efficiency when the carrier frequency is increased from the present value, that is, 25 kHz to 38 kHz within a range of a load equal to or lower than 42% illustrated in Fig. 6A. Similarly, Fig. 8B is a graph illustrating a change in overall efficiency when the carrier frequency is increased from the present value, that is, 25 kHz to 38 kHz within a range where a temperature increase value of each of the switching elements illustrated in Fig. 6B is equal to or lower than 17 deg (equal to or lower than 42% in load conversion).

In Fig. 8A and Fig. 8B, an improvement in overall efficiency is observed within the range of the load equal to or lower than 42%, indicating an improvement in overall efficiency by a maximum of 15%.

Fig. 8C is a graph illustrating a relationship between an output of an inverter circuit and overall efficiency of inverter × motor due to a loss difference in a resonance circuit in an inverter having an identical output capacity.

Losses in the switching elements Q1a to Q3b and the reactor Lx in the resonance circuit 25 vary depending on a circuit design, and, when a loss in the resonance circuit 25 increases, a loss ratio of the resonance circuit 25 with respect to the inverter circuit 26 increases.

Although, when a design value of the resonance circuit is optimally designed in those illustrated in Fig. 8C, it is optimal to switch a branch point of overall efficiency around 25%, it is optimal, when the resonance circuit is designed with a loss of 150% as compared with the optimum design, to switch the branch point of overall efficiency around 80%.

When a loss in the resonance circuit differs as described above, a ratio of a current or power at which the effect is reversed differs when overall efficiency of inverter × motor is compared between when soft switching is implemented and when soft switching is stopped.

Therefore, to optimize overall efficiency of inverter × motor, the design value of the resonance circuit is used to determine each predetermined value of a ratio for stopping soft switching.

Since the design value of the resonance circuit 25 varies depending on selection of circuit components, a predetermined value is determined within a range of a ratio of a current or power equal to or higher than 25% and equal to or lower than 80% with respect to a rating at which overall efficiency is branched.

In addition, an optimum predetermined value may be used by taking into consideration variations in circuit design due to environmental factors such as component accuracy and temperature.

### (5-4-1) Stop Control for Resonance Circuit 25

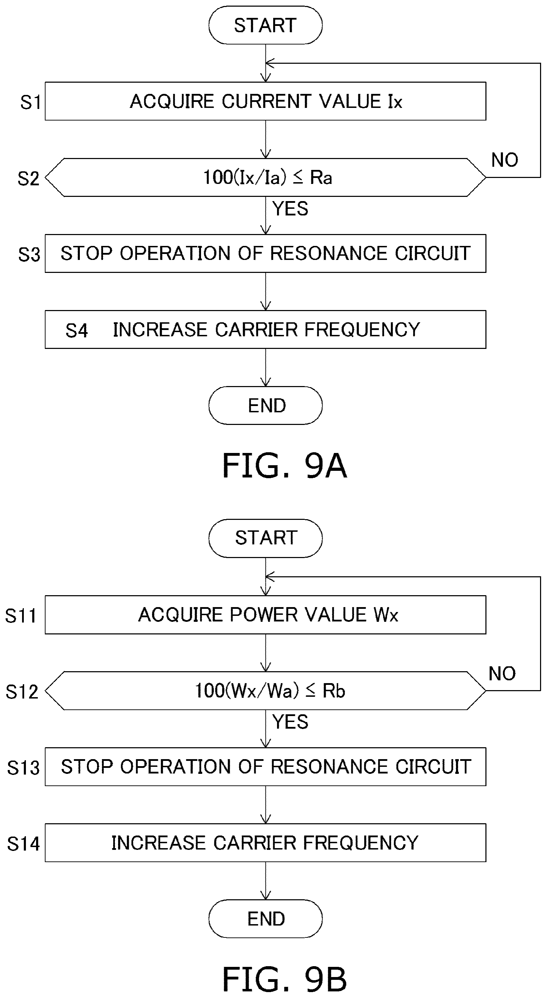

Therefore, in the present embodiment, the microcomputer 42 performs switching between operation and stop of the resonance circuit 25 in accordance a flowchart illustrated in Fig. 9A.

### (Step S1)

The microcomputer 42 acquires a current value Ix of the inverter circuit 26 via the current detector 24.

### (Step S2)

Next, the microcomputer 42 determines whether or not the acquired current value Ix is equal to or lower than a predetermined value of Ra% with respect to a rated current value Ia of the inverter. When 100(Ix/Ia) ≤ Ra, the processing proceeds to step S3, and, when 100(Ix/Ia) > Ra, the processing returns to step S1. In the present embodiment, Ra = 42.

### (Step S3)

Next, the microcomputer 42 causes both the first auxiliary switching element Sxa and the second auxiliary switching element Sxb in the resonance circuit 25 to each be in the off state to stop operation of the resonance circuit 25.

### (Step S4)

The microcomputer 42 increases the carrier frequency of the inverter circuit 26. In the present embodiment, the carrier frequency is increased from 25 kHz to 38 kHz inclusive.

### (5-4-2) First Modification Example of Stop Control for Resonance Circuit 25

When a load is substituted by the output power of the inverter circuit 26, switching is performed between operation and stop of the resonance circuit 25 in accordance with a flowchart illustrated in Fig. 9B.

### (Step S11)

The microcomputer 42 acquires a voltage value and a current value of the inverter circuit 26 via the voltage detector 23 and the current detector 24, and calculates a power value Wx.

### (Step S12)

Next, the microcomputer 42 determines whether or not the calculated power value Wx is equal to or lower than a predetermined value of Rb% with respect to a power value Wa under a rated load. When 100(Wx/Wa) ≤ Rb, the processing proceeds to step S13, and, when 100(Wx/Wa) > Rb, the processing returns to step S11. In the present embodiment, Rb = 42.

### (Step S13)

Next, the microcomputer 42 causes both the first auxiliary switching element Sxa and the second auxiliary switching element Sxb in the resonance circuit 25 to each be in the off state to stop operation of the resonance circuit 25.

### (Step S14)

The microcomputer 42 increases the carrier frequency of the inverter circuit 26. In the present embodiment, the carrier frequency is increased from 25 kHz to 38 kHz inclusive.

### (5-4-3) Second Modification Example of Stop Control for Resonance Circuit 25

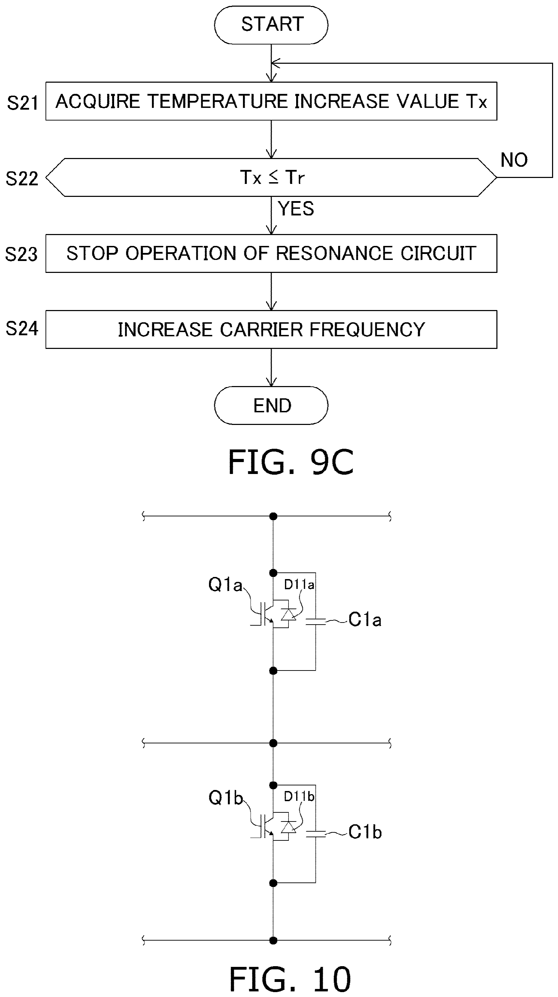

When a load is substituted by an increase in temperature in each of the switching elements Q1a to Q3b in the inverter circuit 26, switching of operation and stop of the resonance circuit 25 is performed in accordance with a flowchart illustrated in Fig. 9C.

### (Step S21)

The microcomputer 42 measures a temperature of each of the switching elements in the inverter circuit 26 via a temperature sensor. The temperature of each of the switching elements Q1a to Q3b is used to calculate a temperature increase value Tx of a package of the switching elements with respect to an ambient temperature.

### (Step S22)

Next, the microcomputer 42 determines whether or not the calculated temperature increase value Tx is equal to or lower than a predetermined value Tr. When Tx ≤ Tr, the processing proceeds to step S23, and, when Tx > Tr, the processing returns to step S21. In the present embodiment, Tr = 17 (deg).

### (Step S23)

Next, the microcomputer 42 causes both the first auxiliary switching element Sxa and the second auxiliary switching element Sxb in the resonance circuit 25 to each be in the off state to stop operation of the resonance circuit 25.

### (Step S24)

The microcomputer 42 increases the carrier frequency of the inverter circuit 26. In the present embodiment, the carrier frequency is increased from 25 kHz to 38 kHz inclusive.

### (6) Features

(6-1)
Although a switching loss in the inverter circuit 26 decreases as the resonance circuit 25 operates, efficiency decreases conversely since, when a load applied to the inverter circuit 26 becomes equal to or lower than a predetermined value, consumption energy in the resonance circuit 25 exceeds consumption energy in the inverter circuit 26. Therefore, in this inverter device 100, operation of the resonance circuit 25 is stopped when a load is equal to or lower than the predetermined value to improve efficiency of the inverter device 100 as a whole.

(6-2)
Since an increase or a decrease in load applied to the inverter circuit 26 appears as an increase or a decrease in output current of the inverter circuit 26, the microcomputer 42 stops operation of each of the resonance circuits 25 when a ratio of a detection value of the current detector 24 with respect to an output current under a full load is equal to or lower than a predetermined value.

(6-3)
Since an increase or a decrease in load applied to the inverter circuit 26 appears as an increase or a decrease in output power of the inverter circuit 26, the microcomputer 42 calculates output power of the inverter circuit 26 from respective detection values of the voltage detector 23 and the current detector 24, and stops operation of each of the resonance circuits 25 when a ratio of the calculated value with respect to the output power under a rated load is equal to or lower than a predetermined value.

(6-4)
Since an increase or a decrease in load applied to the inverter circuit 26 appears as an increase or a decrease in temperature of each of the switching elements Q1a to Q3b in the inverter circuit 26, the microcomputer 42 acquires a surface temperature of the package of the switching elements Q1a to Q3b, calculates a difference between the surface temperature and the ambient temperature as a temperature increase value, and stops operation of the resonance circuit 25 when the calculated value is equal to or lower than a predetermined value.

(6-5)
When the rated output current of the inverter circuit 26 is 100%, a first predetermined value is set between 25% and 80% inclusive.

(6-6)
When the rated output power of the inverter circuit 26 is 100%, a second predetermined value is set between 25% and 80% inclusive.

(6-7)
The microcomputer 42 sets the carrier frequency after operation of each of the resonance circuits 25 is stopped to be higher than the carrier frequency when each of the resonance circuits 25 is operated. As the inverter circuit 26 operates when a load applied to the inverter circuit 26 is equal to or lower than the predetermined value and within the frequency driving range that is impossible to achieve even when each of the resonance circuits 25 operates, efficiency of the inverter device 100 and the motor 70 improves as a whole.

(6-8)
The switching elements Q1a to Q3b in the inverter circuit 26 are wide band gap devices each including a wide band gap semiconductor of silicon carbide (SiC) or gallium nitride (GaN). Therefore, an effect of decreasing a loss in each of the switching elements Q1a to Q3b is enhanced.

(6-9)
The inverter circuit 26 includes the switching leg 261 to which the first switching element Q1a forming the upper arm and the second switching element Q1b forming the lower arm are coupled to each other in series. In addition, the resonance circuits 25 each include the first auxiliary circuit 251a and the second auxiliary circuit 251b. The first auxiliary circuit 251a is a circuit in which the first auxiliary switching element Sxa is combined with one or more first reactors Lxa, one or more first diodes Dxa, and one or more first auxiliary capacitors Cxa, respectively, and is coupled in parallel to the first switching element Q1a in the inverter circuit 26.

The second auxiliary circuit 251b is a circuit in which the second auxiliary switching element Sxb is combined with one or more second reactors Lxb, one or more second diodes Dxb, and one or more second auxiliary capacitors Cxb, respectively, and is coupled in parallel to the second switching element Q1b in the inverter circuit 26.

(6-10)
The first switching element Q1a and the second switching element Q1b are metal-oxide-semiconductor field-effect transistors (MOSFETs). The parasitic diode for the first switching element Q1a is used as a freewheeling diode. In addition, the parasitic diode for the second switching element Q1b is used as a freewheeling diode.

(6-11)
In the first auxiliary circuit 251a, the first auxiliary switching element Sxa and the first reactor Lxa are coupled to each other in series and a circuit in which one end of the first auxiliary capacitor Cxa is coupled to the anode of the first diode Dxa is coupled in parallel to the first reactor Lxa.

In the second auxiliary circuit 251b, the second auxiliary switching element Sxb and the second reactor Lxb are coupled to each other in series and a circuit in which one end of the second auxiliary capacitor Cxb is coupled to the cathode of the second diode Dxb is coupled in parallel to the second reactor Lxb. The microcomputer 42 turns on the second auxiliary switching element Sxb when the first switching element Q1a is turned off to allow the first auxiliary capacitor Cxa to discharge electricity, and then turns on the second switching element Q1b.

(6-12)
The refrigeration apparatus 1 is mounted with the motor drive device including the inverter device 100 and the motor that the inverter device 100 drives.

### (7) Other

Although, in the present embodiment, the switching elements Q1a to Q3b are MOSFETs or wide band gap devices, it is possible to use IGBTs when the carrier frequency is not increased to such a level that is applied in the present embodiment.

When IGBTs are used, however, the first freewheeling diode D11a is coupled in an anti-parallel manner to the first switching element Q1a, and the second freewheeling diode D11b is coupled in an anti-parallel manner to the second switching element Q1b, as illustrated in Fig. 10.

While the embodiment of the present disclosure has been described above, it will be understood that various changes in form and detail may be made therein without departing from the spirit and scope of the present disclosure as set forth in the appended claims.

### REFERENCE SIGNS LIST

- 1: REFRIGERATION APPARATUS
- 25: RESONANCE CIRCUIT
- 26: INVERTER CIRCUIT
- 42: MICROCOMPUTER (CONTROL UNIT)
- 70: MOTOR
- 100: INVERTER DEVICE
- 251a: FIRST AUXILIARY CIRCUIT
- 251b: SECOND AUXILIARY CIRCUIT
- 261: SWITCHING LEG
- Cxa: FIRST AUXILIARY CAPACITOR (FIRST CAPACITOR)
- Cxb: SECOND AUXILIARY CAPACITOR (SECOND CAPACITOR)
- D11a: FIRST FREEWHEELING DIODE
- D11b: SECOND FREEWHEELING DIODE
- Dxa: FIRST DIODE
- Dxb: SECOND DIODE
- Lxa: FIRST REACTOR
- Lxb: SECOND REACTOR
- Q1a: FIRST SWITCHING ELEMENT
- Q1b: SECOND SWITCHING ELEMENT
- Sxa: FIRST AUXILIARY SWITCHING ELEMENT
- Sxb: SECOND AUXILIARY SWITCHING ELEMENT

### CITATION LIST

### PATENT LITERATURE

PTL 1: Japanese Unexamined Patent Application Publication No. H8-149854

## Claims

1. An inverter device (100) comprising:
an inverter circuit (26) to which a resonance circuit (25) is coupled;
a detection unit that directly or indirectly detects a load applied to the inverter circuit (26); and
a control unit (42) that stops operation of the resonance circuit (25) when a detection value of the detection unit is equal to or lower than a predetermined value.

2. The inverter device (100) according to claim 1, wherein
the detection unit detects an output current of the inverter circuit (26), and
the control unit (42) stops operation of the resonance circuit (25) when a detection value of the output current is equal to or lower than a first predetermined value.

3. The inverter device (100) according to claim 1, wherein
the detection unit detects output power of the inverter circuit (26), and
the control unit (42) stops operation of the resonance circuit (25) when a detection value of the output power is equal to or lower than a second predetermined value.

4. The inverter device (100) according to claim 1, wherein
the detection unit detects a temperature of a switching element in the inverter circuit (26), and
the control unit (42) stops operation of the resonance circuit (25) when a detection value of the temperature is equal to or lower than a third predetermined value.

5. The inverter device according to claim 2, wherein, when a rated output current of the inverter circuit (26) is 100%, the first predetermined value is set between 25% and 80% inclusive.

6. The inverter device according to claim 3, wherein, when rated output power of the inverter circuit (26) is 100%, the second predetermined value is set between 25% and 80% inclusive.

7. The inverter device (100) according to any one of claims 1 to 6, wherein
the control unit (42) determines a carrier frequency of the inverter circuit (26), and
the control unit (42) further sets the carrier frequency after operation of the resonance circuit (25) is stopped to be higher than the carrier frequency when the resonance circuit (25) is operated.

8. The inverter device (100) according to any one of claims 1 to 6, wherein
the switching element in the inverter circuit (26) is a wide band gap device including a wide band gap semiconductor of silicon carbide (SiC) or gallium nitride (GaN).

9. The inverter device (100) according to any one of claims 1 to 6, wherein
the inverter circuit (26) includes a switching leg (261) to which
a first switching element (Q1a) forming an upper arm, and
a second switching element (Q1b) forming a lower arm
are coupled to each other in series, and
the resonance circuit (25) includes:
a first auxiliary circuit (251a) that is a circuit in which a first auxiliary switching element (Sxa) is combined with one or more first reactors (Lxa), one or more first diodes (Dxa), and one or more first capacitors (Cxa), respectively, the first auxiliary circuit (251a) being coupled in parallel to the first switching element (Q1a) in the inverter circuit (26); and
a second auxiliary circuit (251b) in which a second auxiliary switching element (Sxb) is combined with one or more second reactors (Lxb), one or more second diodes (Dxb), and one or more second capacitors (Cxb), respectively, the second auxiliary circuit (251b) being coupled in parallel to the second switching element (Q1b) in the inverter circuit (26).

10. The inverter device (100) according to claim 9, wherein
the inverter circuit (26) further includes:
a first freewheeling diode (D11a) coupled in parallel to the first switching element (Q1a); and
a second freewheeling diode (D11b) coupled in parallel to the second switching element (Q1b).

11. The inverter device (100) according to claim 9, wherein
the first switching element (Q1a) and the second switching element (Q1b) are metal-oxide-semiconductor field-effect transistors (MOSFETs),
a parasitic diode for the first switching element (Q1a) is used as a freewheeling diode, and
a parasitic diode for the second switching element (Q1b) is used as a freewheeling diode.

12. The inverter device (100) according to claim 10, wherein,
in the first auxiliary circuit (251a), the first auxiliary switching element (Sxa) and the first reactor (Lxa) are coupled to each other in series and a circuit in which one end of the first capacitor (Cxa) is coupled to an anode of the first diode (Dxa) is coupled in parallel to the first reactor (Lxa),
in the second auxiliary circuit (251b), the second auxiliary switching element (Sxb) and the second reactor (Lxb) are coupled to each other in series and a circuit in which one end of the second capacitor (Cxb) is coupled to a cathode of the second diode (Dxb) is coupled in parallel to the second reactor (Lxb), and
the control unit (42) turns on the second auxiliary switching element (Sxb) when the first switching element (Q1a) is turned off to allow the first capacitor (Cxa) to discharge electricity, and then turns on the second switching element (Q1b).

13. A motor drive device comprising:
the inverter device (100) according to any one of claims 1 to 6; and
a motor (70) that the inverter device (100) drives.

14. A refrigeration apparatus comprising the inverter device (100) according to any one of claims 1 to 6.
